# FASCICULE DE BREVET EUROPEEN

(11) **EP 1 714 689 B1**
(45) Date de publication et mention de la délivrance du brevet: **11.06.2008**
(21) Numéro de dépôt: 06290597.1
(22) Date de dépôt: 12.04.2006
(51) Int. Cl.: B01D 46/52

(54) **Elément filtrant, système de filtration comprenant un tel élément filtrant et procédé de fabrication d'un tel système de filtration**
Filterelement, Filtrationsystem mit einem solchen Filterelement und Verfahren zur Herstellung eines solchen Filtrationsystems
Filter element, filtration system with such a filter element and method for manufacturing such a filtration system

(30) Priorité: 19.04.2005 FR 0503919
(43) Date de publication de la demande: 25.10.2006
(73) Titulaire: FILTRAUTO, 78286 Guyancourt Cedex (FR); Sogefi Filtration Ltd, Llantrisant CF72 8YU (GB)
(72) Inventeur: Scotford, Tim, Nantyderry Abergavenny NP7 9DW (GB)
(74) Mandataire: Garel, Régis

(56) Documents cités:
- EP-B- 1 159 052
- US-A1- 2002 184 864

## Description

La présente invention se rapporte aux filtres à air.

Plus particulièrement l'invention concerne un élément filtrant destiné à être inséré dans une enceinte de filtration comprenant:
un médium filtrant qui s'étend entre une face amont et une face aval, perméable, présentant chacune un bord périphérique, et qui sont destinées à être traversées par un fluide à filtrer,
un cadre présentant un bord périphérique se projetant axialement depuis l'une des faces amont et aval du médium filtrant, et un élément de joint.

Le document EP-B1-1 159 052 décrit un exemple d'un tel élément filtrant, dans lequel le cadre comprend une extension qui se projette axialement depuis l'une des faces d'écoulement du médium filtrant. Cette extension supporte l'élément de joint afin de réaliser un assemblage étanche entre le cadre et l'enceinte de filtration.

Cependant ce type d'élément filtrant nécessite un élément de joint supplémentaire afin de raccorder le cadre au médium filtrant. En conséquence une étape supplémentaire est nécessaire pour réaliser la pose du deuxième élément de joint entre le médium filtrant et le cadre.

La présente invention a notamment pour but de pallier ces inconvénients.

A cet effet, selon l'invention, un élément filtrant du genre en question est caractérisé en ce que l'élément de joint est adapté pour raccorder de manière fixe le cadre et le médium filtrant et en ce que ledit élément de joint présente une portion d'étanchéité adaptée pour réaliser un assemblage étanche entre le médium filtrant et l'enceinte de filtration.

Grâce à ces dispositions, un seul élément de joint est nécessaire pour réaliser l'élément filtrant présentant des caractéristiques d'étanchéité souhaitée. Ce qui simplifie la fabrication de l'élément filtrant et permet de diminuer les coûts.

Dans divers modes de réalisation de l'élément filtrant selon l'invention, on peut éventuellement avoir recours en outre à l'une et/ou à l'autre des dispositions suivantes :
- l'élément de joint est disposé sur le bord périphérique de la face amont de l'élément filtrant ;
- l'élément de joint est disposé sur le bord périphérique de la face aval de l'élément filtrant ;
- le cadre comporte un orifice central de retenue et le bord périphérique du cadre est relié à l'orifice central par des broches s'étendant radialement ;
- le médium filtrant comporte une bande de média filtrant comprenant une feuille ondulée et une feuille non ondulée fixée sur un bras et enroulée autour du bras), de manière à former dans l'élément filtrant des canaux de circulation parallèles à l'axe du bras (24).

L'invention se rapporte aussi à un système de filtration comprenant une enceinte de filtration dans laquelle est disposé l'élément filtrant selon l'une quelconque des revendications précédentes, ladite enceinte de filtration comprenant un boîtier, et un couvercle destiné à fermer le boîtier, le couvercle présentant une ouverture d'admission de l'air à filtrer débouchant sur la face amont du médium filtrant.

Selon d'autres caractéristiques :
- le boîtier exerce une pression radiale sur la portion d'étanchéité de l'élément de joint ;
- le boîtier comporte un bord annulaire supplémentaire se projetant axialement vers le couvercle et autour duquel est disposé l'élément de joint ;
- le couvercle et le boîtier exercent une pression axiale sur l'élément de joint ;
- le couvercle et le boîtier exercent une pression radiale sur la portion d'étanchéité de l'élément de joint.

L'invention se rapporte aussi à un procédé de fabrication d'un élément filtrant caractérisé en ce qu'il comprend les étapes suivantes :
- une bande de média filtrant est fixée sur un bras et enroulé autour de celui-ci pour former le médium filtrant,
- puis une extrémité du bras formant l'axe est emboîtée dans un orifice du cadre,
- puis l'élément de joint est directement surmoulé sur le bord périphérique du cadre et le bord périphérique de l'une des faces du médium filtrant.

D'autres caractéristiques et avantages de l'invention apparaîtront au cours de la description suivante d'un de ses modes de réalisation, donné à titre d'exemple non limitatif, en regard des dessins joints.

Sur les dessins:
- la figure 1 représente une vue en éclaté en perspective d'un système de filtration selon l'invention,
- la figure 2 représente une vue en perspective d'un élément filtrant formé par le médium filtrant, le cadre et le bras formant l'axe,
- la figure 3 est une vue de détail selon une coupe radiale du système de filtration selon un premier mode de réalisation,
- les figures 4, 5 et 6 représentent chacune une vue similaire à la figure 3 respectivement d'un deuxième, d'un troisième et d'une quatrième mode de réalisation du système de filtration,
- la figure 7 représente une vue en perspective d'une partie d'un média filtrant.

Sur les différentes figures, les mêmes références désignent des éléments identiques ou similaires.

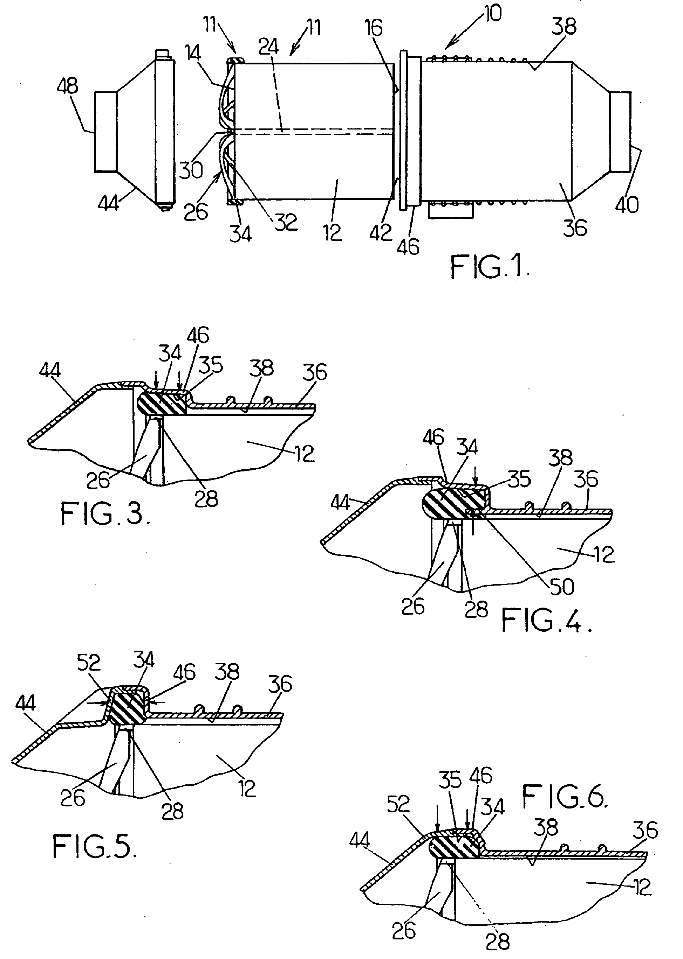

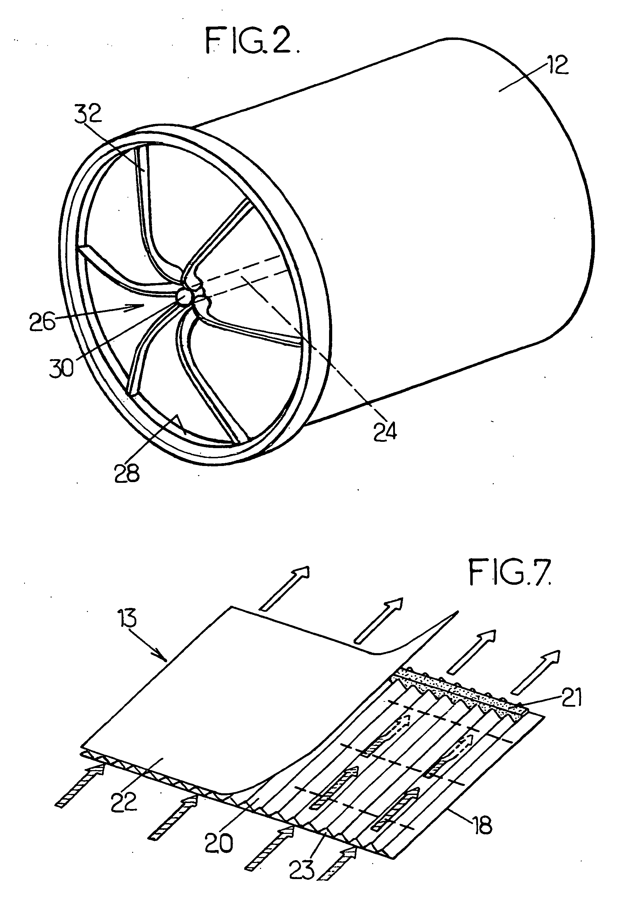

Sur la figure 1, le système de filtration 10 comporte un élément filtrant 11 représenté à la figure 2 et comprenant un médium filtrant 12 et un cadre 26. Le médium filtrant 12 est cylindrique et présente une première face 14, dite amont, à travers laquelle arrive l'air non filtré, et une deuxième face 16, dite aval, à travers laquelle sort l'air filtré. Les deux faces 14, 16 sont perméables et présentent chacune un bord périphérique circulaire.

Le médium filtrant 12 comporte un média filtrant 13 comprenant une feuille de support perméable ondulée 18 qui forme une pluralité de sommets et de creux formant une pluralité de canaux 20 parallèles les uns aux autres, et une feuille de support non ondulée 22, adjacente et liée à la feuille ondulée 18, tel que représenté à la figure 7.

Les deux feuilles 18, 22 sont enroulées autour d'un axe longitudinal Z formé par un bras 24, de manière à former un médium filtrant 12 configuré en une bobine cylindrique, comme représenté aux figures 1 et 2, de telle manière que les canaux 20 soient sensiblement parallèles à l'axe du bras 24.

Certains canaux 20, appelées canaux d'entrée, sont choisis ouverts au niveau de la face amont 14 du médium filtrant 12 et fermés hermétiquement au niveau de la face aval 16 grâce au bourrelet 21. D'autres canaux, appelés canaux de sortie, sont adjacents aux premiers canaux d'entrée 20 et présentent une extrémité fermée au niveau de la face amont 14 au moyen d'un deuxième bourrelet, non représenté et une extrémité ouverte au niveau de la face aval 16. Ainsi le flux de l'air à filtrer est obligé de passer au travers des canaux d'entrée 20 de la feuille ondulée 18, et ainsi les particules de poussière de l'air à filtrer sont piégées dans la feuille ondulée 18. En effet, lorsque le flux d'air emprunte un canal d'entrée ouvert du côté amont et fermé du côté aval, il est obligé de traverser radialement une couche de média filtrant pour emprunter un canal de sortie ouvert du côté aval et fermé du côté amont.

L'élément filtrant 11 comporte en outre un cadre 26 disposé sur la face amont 14 du médium filtrant 12. Ce cadre 26 présente un bord périphérique circulaire 28, dont le diamètre est sensiblement identique à celui de la face amont 14 du médium filtrant 12. Le cadre 26 se projette axialement depuis la face amont 14 du médium filtrant 12. Il comporte en outre un orifice central de retenue 30, relié au bord périphérique 28 par des broches 32, et fixé par emboîtement à l'extrémité du bras 24 formant l'axe longitudinal Z. Les broches s'étendent radialement entre l'orifice de retenue 30 et le bord périphérique 28.

Selon une variante de réalisation, le centre 30 du cadre 26 est seulement disposé adjacent et non fixé à l'extrémité du bras 24 formant l'axe longitudinal Z.

Sur les figures 1 et 2, le bord périphérique 28 du cadre 26 est relié au bord périphérique de la face amont 14 du médium filtrant 12 par l'intermédiaire d'un élément de joint 34. L'élément de joint 34 est réalisé par moulage de manière à assembler de manière fixe le cadre 26 et le médium 12 sur tout le pourtour circulaire. Cet élément de joint 34 est réalisé, par exemple, en polyuréthane.

Le système de filtration 10 comporte en outre une enceinte de filtration comprenant un boîtier 36 creux de forme cylindrique et destiné à recevoir l'élément filtrant 11. Le boîtier 36 présente une face interne 38 adjacente au médium filtrant 12 et une face externe.

Le boîtier 36 présente une face de sortie 40 orientée du côté de la face aval 16 du médium filtrant 12 et une face d'assemblage 42 disposée du côté de la face amont 14 du médium filtrant 12 et destinée à être assemblée à un couvercle 44. La face d'assemblage 42 présente, de plus, un rebord 46 s'étendant vers l'extérieur du boîtier 36, dans lequel est logé l'élément de joint 34 lorsque l'élément filtrant 11 est disposé dans ledit boîtier 36.

Le système de filtration 10 comporte en outre un couvercle 44, coopérant avec le boîtier 36 pour le fermer de manière étanche. Cette fermeture peut être réalisée par encliquetage, vissage ou par d'autres moyens d'attache. Le couvercle 44 présente aussi une ouverture d'admission 48 de l'air à filtrer débouchant sur la face amont 14 du médium filtrant 12.

Selon un premier mode de réalisation, l'élément de joint 34 est compressé radialement par le rebord 46 du boîtier 36, tel que représenté à la figure 3. Cette disposition est obtenue lorsque le rebord 46 de la face d'assemblage 42 du boîtier 36 exercent une pression radiale sur une portion d'étanchéité l'élément de joint 34, coincé entre le rebord 46 du boîtier 36 et l'élément filtrant 11. Ainsi lorsque l'élément filtrant 11 est inséré dans le boîtier 36, la portion d'étanchéité 35 de l'élément de joint 34 est compressée radialement et réalise une étanchéité, empêchant l'air non filtré de passer entre le médium filtrant 12 et la face interne 38 du boîtier 36.

L'élément filtrant 11 tel que décrit précédemment fonctionne de la manière suivante:

L'air non filtré arrive par l'ouverture d'admission 48 du couvercle 44, puis arrive en avant de la face amont 14 du médium filtrant 12. L'écoulement de l'air non filtré est dirigé à travers les extrémités ouvertes des canaux 20 du médium filtrant 12. L'air non filtré ne peut s'écouler entre le médium filtrant 12 et la face interne 38 du boîtier 36 grâce à l'élément de joint 34.

Puis l'air est filtré lorsqu'il passe au travers des canaux 20 du médium filtrant 12 présentant une ouverture de sortie débouchant sur la face de sortie 40 du boîtier 36.

L'élément de joint 34 ainsi disposé offre donc une étanchéité sûre, et empêche la face interne 38 du boîtier 36 d'être salie par l'air non filtré, et par conséquent empêche, lors d'un remplacement de l'élément filtrant 11, que les particules de poussière passent à travers la face de sortie 40 du boîtier 36, et ainsi empêche la contamination des éléments (non représentés) placés en aval du système de filtration (10). La compression radiale de l'élément de joint 34 empêche toute déviation du flux de l'air non filtré.

De plus l'élément de joint 34 étant disposé sur la face amont 14 du médium filtrant 12, cela permet de modifier structurellement uniquement le bord 46 de la face d'assemblage 42 du boîtier 36, et non les dimensions de la face de sortie 40 du boîtier 36.

La fabrication d'un élément filtrant selon l'invention est réalisée de la manière suivante:

Une bande de feuille de support perméable ondulée 18 est collée sur une bande de feuille sensiblement plane 22 avec un cordon d'adhésif, tel que connu de l'homme du métier pour former un média filtrant 13. Puis l'extrémité des deux bandes 18, 22 assemblées est disposée dans une fente du bras 24 formant l'axe longitudinal Z, et le bras 24 est déplacé en rotation de manière à enrouler le média filtrant 12 autour de lui et de former le médium filtrant.

Un autre cordon d'adhésif fondu est appliqué sur le médium pendant qu'il est enroulé autour du bras. Les deux cordons forment l'étanchéité des canaux d'entrée 20.

Lorsque le média filtrant 13 est complètement enroulé, il forme le médium filtrant 12 et le bras 24 est fixé au cadre 26 par l'un des moyens décrit précédemment. Le cadre 26 et le bras 24 sont alors solidaires l'un de l'autre. L'ensemble cadre 26, bras 24 et médium filtrant 12 est alors placé dans un moule, de manière à ce que le cadre 26 soit dirigé vers le bas du moule. Une couche de polyuréthane est alors disposée autour du cadre 26 et du médium filtrant 12, et se dilate jusqu'à remplir le moule, et forme alors un élément de joint 34 d'étanchéité assemblant le cadre 26 et le médium filtrant 12.

Selon une variante de réalisation, le cadre 26, le bras 24 et le médium filtrant 12 peuvent être placés séparément dans le moule, puis assemblés dans celui-ci avant l'étape de surmoulage de l'élément de joint 34.

L'ensemble formé par le cadre 26, le bras 24 et le médium filtrant 12 et l'élément de joint 34 forment l'élément filtrant 11 et ce dernier est prêt à être inséré dans le boîtier 36. Grâce à l'élément de joint 34, l'étanchéité est assurée entre la face interne 38 du boîtier 36 et l'élément filtrant 12.

Selon un deuxième mode de réalisation représenté à la figure 4, le bord 46 de la face d'assemblage 42 du boîtier 36 présente un bord annulaire supplémentaire 50 se projetant axialement vers le couvercle 44. L'élément de joint 34 est moulé autour du bord annulaire supplémentaire 50. Dans cet agencement, l'élément de joint 34 est comprimé radialement entre le bord du boîtier 36 et le bord annulaire supplémentaire 50 du boîtier. Cet agencement permet d'obtenir une étanchéité sûre, et indépendante des déplacements du boîtier 36 par rapport au médium filtrant 12 dus aux vibrations et aux différences de températures.

Selon un troisième mode de réalisation représenté à la figure 5, l'élément de joint 34 est soumis à une pression axiale entre le boîtier 36 et le couvercle 44. Pour cela, l'élément de joint 34 est moulé, comme décrit précédemment, autour de l'ensemble formé par le cadre 26 et la face amont 14 du médium filtrant 12. Le boîtier 36 présente alors sur la face d'assemblage 42 un rebord 46 qui s'étend perpendiculairement à l'axe longitudinal Z. Le couvercle 44 présente aussi un rebord 52 perpendiculaire à l'axe longitudinal Z, et lors de l'assemblage du couvercle 44 sur le boîtier 36, le rebord du boîtier et le couvercle exercent chacun une pression axiale dirigée vers l'élément de joint.

Selon un quatrième mode de réalisation représenté à la figure 6, l'élément de joint 34 est compressé radialement par le bord 46 du boîtier 36 et aussi par le bord 52 couvercle 44. Cet agencement permet d'obtenir une étanchéité entre le couvercle et le boîtier.

De manière non limitative l'élément de joint peut être disposé sur le bord périphérique de la face aval de l'élément filtrant selon le même procédé de fabrication que décrit précédemment dans le premier mode de réalisation. Le boîtier présente alors une forme particulière permettant d'accueillir l'élément filtrant.

## Revendications

1. Elément filtrant destiné à être inséré dans une enceinte de filtration comprenant:
- un médium filtrant (12) qui s'étend entre une face amont et une face aval perméables, présentant chacune un bord périphérique, et qui sont destinées à être traversées par un fluide à filtrer,
- un cadre (26) présentant un bord périphérique (28) se projetant axialement depuis l'une des face amont et aval du médium filtrant (12), et
- un élément de joint (34),
**caractérisé en ce que** l'élément de joint (34) est adapté pour raccorder de manière fixe le cadre (26) et le médium filtrant (12) et **en ce que** ledit élément de joint (34) présente une portion d'étanchéité adaptée pour réaliser un assemblage étanche entre le médium filtrant (12) et l'enceinte de filtration.

2. Elément filtrant selon la revendication 1, dans lequel l'élément de joint (34) est disposé sur le bord périphérique de la face amont (14) de l'élément filtrant (11).

3. Elément filtrant selon la revendication 1, dans lequel l'élément de joint (34) est disposé sur le bord périphérique de la face aval (16) de l'élément filtrant (11).

4. Elément filtrant selon l'une des revendications précédentes, dans lequel le cadre (26) comporte un orifice central de retenue (30) et le bord périphérique (28) du cadre (26) est relié à l'orifice central (30) par des broches (32) s'étendant radialement.

5. Elément filtrant selon l'une des revendications précédentes, dans lequel le médium filtrant (12) comporte une bande de média filtrant (13) comprenant une feuille ondulée (18) et une feuille non ondulée (19) fixée sur un bras (24) et enroulée autour du bras (24), de manière à former dans l'élément filtrant des canaux de circulation parallèles à l'axe du bras (24).

6. Système de filtration comprenant une enceinte de filtration dans laquelle est disposé l'élément filtrant (11) selon l'une quelconque des revendications précédentes, ladite enceinte de filtration comprenant un boîtier (36) et un couvercle (44) destiné à fermer le boîtier (36), le couvercle (44) présentant une ouverture d'admission de l'air à filtrer débouchant sur la face amont (14) du médium filtrant (12).

7. Système de filtration selon la revendication 6, dans lequel le boîtier (36) exerce une pression radiale sur la portion d'étanchéité de l'élément de joint (34).

8. Système de filtration selon la revendication 6, dans lequel le boîtier comporte un bord annulaire supplémentaire (50) se projetant axialement vers le couvercle (44) et autour duquel est disposé l'élément de joint (34).

9. Système de filtration selon la revendication 6, dans lequel le couvercle (44) et le boîtier (36) exercent une pression axiale sur l'élément de joint (34).

10. Système de filtration selon la revendication 6, dans lequel le couvercle (44) et le boîtier (36) exercent une pression radiale sur la portion d'étanchéité de l'élément de joint (34).

11. Procédé de fabrication d'un élément filtrant selon la revendication 1, **caractérisé en ce qu**'il comprend les étapes suivantes :
- une bande de média filtrant (13) est fixée sur un bras (24) et enroulé autour de celui-ci pour former le médium filtrant (12),
- puis une extrémité du bras (24) formant l'axe est emboîtée dans un orifice du cadre (30),
- puis l'élément de joint (34) est directement surmoulé sur le bord périphérique (28) du cadre (26) et le bord périphérique de l'une des faces amont et aval du médium filtrant (12).

## Claims

1. Filter element to be inserted into a filtration chamber comprising:
- a filter medium (12) which extends between an upstream face and a downstream face, with a permeable end, each presenting a peripheral edge, and which are to be traversed by a fluid to be filtered,
- a frame (26) presenting a peripheral edge (28) projecting axially from one of the upstream and downstream faces of the filter medium (12), and
- a seal element (34),
**characterized in that** the seal element (34) is adapted to fixedly connect the frame (26) and the filter medium (12) and **in that** said seal element (34) presents a sealed portion adapted to achieve a sealed assembly between the filter medium (12) and the filtration chamber.

2. Filter element according to Claim 1, in which the seal element (34) is disposed on the peripheral edge of the upstream face (14) of the filter element (11).

3. Filter element according to Claim 1, in which the seal element (34) is disposed on the peripheral edge of the downstream face (16) of the filter element (11).

4. Filter element according to one of the preceding claims, in which the frame (26) comprises a central retaining orifice (30) and the peripheral edge (28) of the frame (26) is connected to the central orifice (30) by radially extending pins (32).

5. Filter element according to one of the preceding claims, in which the filter medium (12) comprises a strip of filtration media (13) comprising a corrugated sheet (18) and a non corrugated sheet (19) fixed to an arm (24) and wound around the arm (24), to form into the filter element circulation channels parallel to the axis of the arm (24).

6. Filtration system comprising a filtration chamber in which the filter element (11) according to any one of the preceding claims is disposed, said filtration chamber comprising a housing (36) and a cover (44) for closing the housing (36) the cover (44) presenting an inlet opening for the air to be filtered terminating on the upstream face (14) of the filter medium (12).

7. Filtration system according to Claim 6, in which the housing (36) exerts radial pressure on the sealed portion of the seal element (34).

8. Filtration system according to Claim 6, in which the housing comprises an additional annular edge (50) projecting axially towards the cover (44) and around which the seal element (34) is disposed.

9. Filtration system according to Claim 6, in which the cover (44) and the housing (36) exert axial pressure on the seal element (34).

10. Filtration system according to Claim 6, in which the cover (44) and the housing (36) exert radial pressure on the sealed portion of the seal element (34).

11. Method for manufacturing a filter element according to Claim 1, **characterized in that** it comprises the following steps:
- a strip of filtration media (13) is fixed to an arm (24) and wound around the arm to form the filter medium (12),
- one end of the arm (24) forming the shaft is then inserted into an orifice of the frame (30),
- the seal element (34) is then directly over-moulded onto the peripheral edge (28) of the frame (26) and the peripheral edge of one of the upstream and downstream faces of the filter medium (12).

## Patentansprüche

1. Filterelement, das zur Einfügung in einen Filtrationsbehälter bestimmt ist, bestehend aus:
- einem Filtermedium (12), das sich zwischen einer durchlässigen vorgeschalteten Fläche und einer durchlässigen nachgeschalteten Fläche erstreckt, die jeweils einen peripheren Rand aufweisen und dazu bestimmt sind, durch ein Filtermittel durchflossen zu werden;
- einem Rahmen (26), der einen peripheren Rand (28) aufweist, welcher axial von einer der vorgeschalteten und nachgeschalteten Fläche des Filtermediums (12) auslädt; und
- einem Dichtungselement (34),
**dadurch gekennzeichnet, dass** das Dichtungselement (34) ausgelegt ist, um den Rahmen (26) und das Filtermedium (12) fest zu verbinden und dass das besagte Dichtungselement (34) einen geeigneten Dichtungsabschnitt aufweist, um eine dichte Verbindung zwischen dem Filtermedium (12) und dem Filtrationsbehälter auszuführen.

2. Filterelement nach Anspruch 1, bei dem das Dichtungselement (34) am peripheren Rand der vorgeschalteten Fläche (14) des Filterelements (11) angeordnet ist.

3. Filterelement nach Anspruch 1, bei dem das Dichtungselement (34) am peripheren Rand der nachgeschalteten Fläche (16) des Filterelements (11) angeordnet ist.

4. Filterelement nach einem der vorstehenden Ansprüche, bei dem der Rahmen (26) eine zentrale Rückhalteöffnung (30) aufweist und der periphere Rand (28) des Rahmens (26) mit der zentralen Öffnung (30) durch Dorne (32) verbunden ist, die sich radial erstrecken.

5. Filterelement nach einem der vorstehenden Ansprüche, bei dem das Filtermedium (12) ein Filtermedienband (13) aufweist, das eine gewellte Folie (18) und eine ungewellte Folie (19) umfasst, das auf einem Arm (24) befestigt und derart um den Arm (24) gewickelt ist, sodass im Filterelement parallel zur Achse des Arms (24) Umlaufkanäle ausgebildet werden.

6. Filtersystem, das einen Filtrationsbehälter umfasst, in dem das Filterelement (11) nach einem der vorstehenden Ansprüche angeordnet ist, wobei der Filtrationsbehälter ein Gehäuse (36) und einen Deckel (44) zum Verschluss des Gehäuses (36) umfasst und der Deckel (44) eine Einlassöffnung der zu filternden Luft aufweist, die in der vorgeschalteten Fläche (14) des Filtermediums (12) mündet.

7. Filtersystem nach Anspruch 6, bei dem das Gehäuse (36) einen radialen Druck auf den Dichtungsabschnitt des Dichtungselements (34) ausübt.

8. Filtersystem nach Anspruch 6, bei dem das Gehäuse einen zusätzlichen ringförmigen Rand (50) aufweist, der axial zum Deckel (44) auslädt und um den das Dichtungselement (34) angeordnet ist.

9. Filtersystem nach Anspruch 6, bei dem der Deckel (44) und das Gehäuse (36) einen axialen Druck auf das Dichtungselement (34) ausüben.

10. Filtersystem nach Anspruch 6, bei dem der Deckel (44) und das Gehäuse (36) einen radialen Druck auf den Dichtungsabschnitt des Dichtungselements (34) ausüben.

11. Fertigungsverfahren eines Filterelements nach Anspruch 1, **dadurch gekennzeichnet, dass** es die nachstehenden Schritte umfasst:
- ein Filtermedienband (13) wird auf einem Arm (24) befestigt und um denselbigen gewickelt, um das Filtermedium (12) auszubilden,
- ein Ende des Arms (24), das die Achse ausbildet, wird in eine Öffnung des Rahmens (30) eingefügt,
- das Dichtungselement (34) wird direkt am peripheren Rand (28) des Rahmens (26) und am peripheren Rand einer der vorgeschalteten und nachgeschalteten Flächen des Filtermediums (12) angeformt.
